Europäisches Patentamt

European Patent Office

Office européen des brevets

(19)

(11) EP 0 519 809 B1

(12) FASCICULE DE BREVET EUROPEEN

(45) Date de publication et mention
de la délivrance du brevet:
**17.04.1996 Bulletin 1996/16**

(51) Int Cl.6: **E21B 47/10**, G01F 1/74

(21) Numéro de dépôt: **92401678.5**

(22) Date de dépôt: **17.06.1992**

(54) **Procédé d'analyse d'un écoulement diphasique dans un puits d'hydrocarbures**

Analyseverfahren für zweiphasige flüssende Flüssigkeiten in einer Ölbohrung

Method for analysing flowing two phase fluids in an oil well

(84) Etats contractants désignés:
**DE FR GB IT NL**

(30) Priorité: **18.06.1991 FR 9107454**

(43) Date de publication de la demande:
**23.12.1992 Bulletin 1992/52**

(73) Titulaires:
- **SCHLUMBERGER LIMITED**
  **New York, N.Y. 10172 (US)**
  Etats contractants désignés:
  **GB**
- **SERVICES PETROLIERS SCHLUMBERGER**
  **F-75007 Paris (FR)**
  Etats contractants désignés:
  **FR**
- **SCHLUMBERGER TECHNOLOGY B.V.**
  **NL-2517 KM Den Haag (NL)**
  Etats contractants désignés:
  **DE IT**
- **SCHLUMBERGER HOLDINGS LIMITED**
  **Road Town, Tortola (VG)**
  Etats contractants désignés:
  **NL**

(72) Inventeurs:
- **Tabeling, Patrick**
  **F-94240 l'Hay les Roses (FR)**
- **Theron, Bernard**
  **F-92310 Sèvres (FR)**

(74) Mandataire: **Hagel, Francis et al**
**ETUDES ET PRODUCTIONS SCHLUMBERGER**
**Service Brevets**
**B.P. 202**
**F-92142 Clamart Cédex (FR)**

(56) Documents cités:
EP-A- 0 362 011          EP-A- 0 394 085
GB-A- 2 118 723          US-A- 3 792 347
US-A- 4 314 476

**Description**

L'invention concerne de façon générale l'analyse d'écoulements diphasiques eau-pétrole dans les puits d'hydrocarbures. L'invention concerne plus particulièrement un procédé permettant de déterminer, à partir de mesures, faites à des profondeurs données, de paramètres tels que la proportion statique d'eau, un profil de variation dudit paramètre suivant la section transversale du puits à la profondeur considérée. L'invention concerne aussi la détermination du débit de pétrole à partir de tels profils.

Il est habituel dans la production d'hydrocarbures que le fluide produit par le puits soit un mélange de deux phases, pétrole et eau. Le pétrole constitue le plus fréquemment la phase dispersée, formée de bulles, et l'eau la phase continue.

Les techniques classiques pour l'analyse des écoulements dans les puits d'hydrocarbures reposent sur la mesure du débit total $Q_t$ et de la proportion statique moyenne d'eau $H_w$ (en anglais "water holdup"). On utilise habituellement un débitmètre à hélice, sensible à la vitesse, pour mesurer le débit total $Q_t$, et un appareil à pression différentielle appelé gradiomanomètre, sensible à la densité, pour la proportion statique d'eau $H_w$. On détermine le débit de pétrole $Q_o$ à partir de ces mesures par la formule classique

$$Q_o = (1 - H_w) (Q_t + V_S.H_w.S)$$

où $V_S$ est la vitesse de glissement entre phases et S la section du puits.

On fait ici l'hypothèse que les valeurs de vitesse et de proportion statique résultant des mesures précitées, qui sont des valeurs moyennes sur la section d'écoulement, sont bien représentatives de l'écoulement, en d'autres termes, que les variations de la vitesse et de la proportion statique d'eau sur une section du puits sont négligeables, ou en tout cas ont globalement une influence négligeable sur le résultat.

Cette hypothèse est justifiée pour un puits vertical. Mais lorsque le puits est incliné, la différence de densité entre les phases tend à provoquer une ségrégation des phases : l'eau, phase lourde, prédomine dans le bas de la section d'écoulement, tandis que le pétrole, plus léger, prédomine dans le haut de cette section. Dans certaines conditions, la ségrégation des phases est complètement réalisée, à savoir que le bas de la section d'écoulement est uniquement occupé par la phase eau et le haut par la phase pétrole (voir à ce sujet l'article SPE 18217 "Oil/Water Flow Structure Measurements in Inclined Pipes", 2-5 Octobre 1988, de P. Vigneaux, G. Catala et J.P. Hulin). On observe dans ce type de situation une circulation à contresens ("backflow") dans le bas de la section d'écoulement.

Il est évident que dans ces conditions, les variations de la proportion d'eau et de la vitesse selon la section d'écoulement étant importantes, les résultats obtenus par les mesures précitées ne fournissent pas une estimation fiable des valeurs moyennes recherchées.

L'invention a pour objet un procédé d'analyse de l'écoulement dans un puits incliné, l'écoulement comprenant du pétrole et de l'eau, lequel procédé est défini dans les revendications annexées.

Le profil de variation obtenu selon l'invention représente une information précieuse pour l'interprétation des mesures. Il peut être établi à partir d'une pluralité de mesures locales telles que celles décrites dans le brevet US 4 974 446 ou la demande de brevet européen 0 394 085, et permet alors de déterminer une valeur moyenne par intégration sur la section d'écoulement.

Il peut également être établi, en sens inverse, à partir d'une valeur moyenne, obtenue par une mesure de type classique telle que décrite plus haut.

L'invention sera bien comprise à la lecture de la description ci-après, faite en référence aux dessins annexés. Dans les dessins :

- la figure 1 représente un modèle d'écoulement utilisé selon l'invention;
- les figures 2A à 2D représentent les différents types de profils de variation de la proportion statique d'eau $\alpha$, dans le cadre de ce modèle;
- les figures 3 et 4 illustrent la concordance des valeurs expérimentales avec celles prédites par le second modèle précité;
- la figure 5 est un diagramme décrivant l'établissement d'un profil de variation de $\alpha$ à partir de mesures locales de ce paramètre;
- la figure 6 est un diagramme décrivant l'établissement d'un profil de variation de $\alpha$ à partir d'une mesure de la valeur moyenne $H_w$ de la proportion d'eau;
- la figure 7 représente schématiquement une section d'écoulement du point de vue des vitesses;
- la figure 8 est un diagramme décrivant l'établissement d'un profil de vitesse à partir d'une mesure de la valeur moyenne de la vitesse;
- la figure 9 est un diagramme décrivant l'établissement d'un profil de vitesse et du débit de pétrole à partir de mesures locales de vitesse;
- la figure 10 permet de comparer des valeurs de vitesse expérimentales avec les valeurs prédites par le modèle.

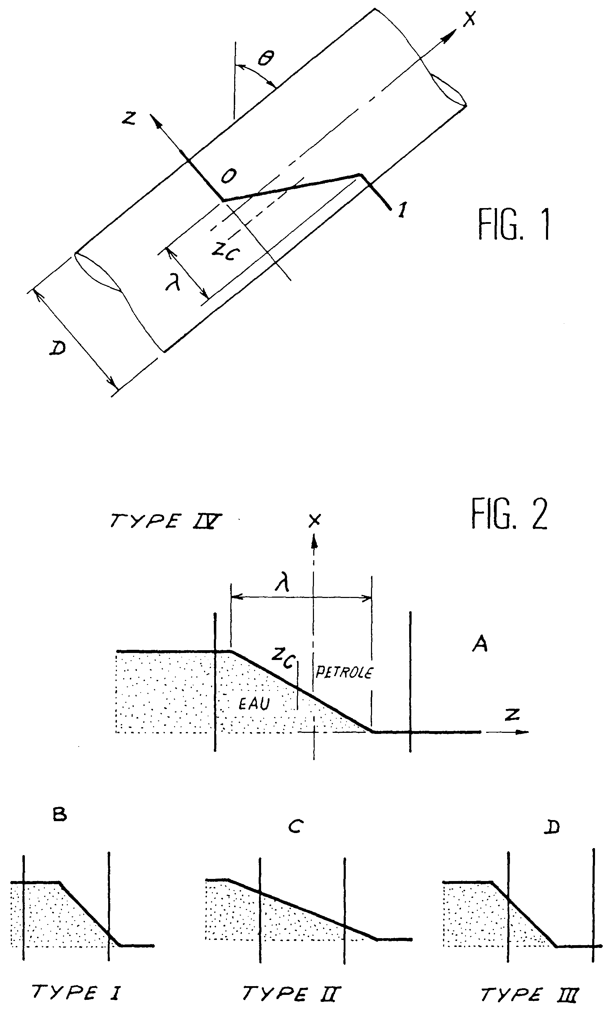

La figure 1 représente une portion d'un puits de production de pétrole de diamètre D. Dans ce puits circule vers la surface un fluide formé d'un mélange de pétrole et d'eau de formation. On supposera dans ce qui suit que le fluide est diphasique et que le gaz présent est en solution dans le fluide. Le cas le plus fréquent est que le pétrole constitue la phase dispersée et l'eau la phase continue et c'est à cette situation que l'on se référera, étant entendu qu'il ne s'agit pas d'une limitation de l'invention.

On définit un système de coordonnées comprenant un axe x'x situé sur l'axe du puits, et des axes y'y (non représenté) et z'z situés dans un plan perpendiculaire à l'axe x'x, l'axe z'z étant dans un plan vertical. L'axe x'x est incliné d'un angle θ par rapport à la verticale.

Les deux phases ont des densités différentes, de l'ordre de 0,8 pour le pétrole, entre 1 et 1,1 pour l'eau, habituellement salée. Il en résulte une tendance à la ségrégation des phases : le pétrole tend à prédominer dans le haut de la section d'écoulement, et l'eau à prédominer dans le bas de la section.

La figure 1 illustre le modèle utilisé selon l'invention pour l'étude de cet écoulement. Le modèle suppose l'existence d'une couche turbulente de mélange eau-pétrole, dont l'extension selon l'axe z'z est notée λ. La figure 1 montre en trait épais un profil de variation de la proportion statique d'eau α (en anglais "water holdup") selon l'axe z'z : dans l'exemple représenté, la proportion d'eau vaut 1 dans le bas de la section, 0 dans le haut, et varie dans la couche de mélange avec un gradient constant. Le profil de la figure 1 correspond à un modèle simple, entièrement défini par la dimension λ et par la position $z_c$ du centre de la couche de mélange. La proportion d'eau α est alors donnée par :

$$\left\{ \begin{array}{ll} \alpha = 1 \ \text{pour} \ z < z_c - \dfrac{\lambda}{2} & (1a) \\\\ \alpha = \dfrac{1}{2} + \dfrac{z_c - z}{\lambda} \ \ \text{pour} \ z_c - \dfrac{\lambda}{2} < z < z_c + \dfrac{\lambda}{2} & (1b) \\\\ \alpha = 0 \ \ \text{pour} \ z > z_c + \dfrac{\lambda}{2} & (1c) \end{array} \right.$$

Si l'on appelle $\alpha_m$ la moyenne de la proportion d'eau α suivant l'axe z'z, l'expression (1b) ci-dessus devient :

$$\alpha = \alpha_m - \frac{z}{\lambda} \qquad (2)$$

L'exemple de la figure 1 montre une couche de mélange entièrement contenue à l'intérieur de la section d'écoulement. Mais le modèle prévoit plusieurs situations selon les valeurs de λ et $z_c$, qui sont illustrées à la figure 2.

La figure 2A montre un profil du même type que celui de la figure 1, à savoir que la couche de mélange est entièrement contenue dans la section d'écoulement. Le fluide dans le bas de la section est uniquement de l'eau, et seule la phase pétrole est présente dans le haut de la stction. Cela correspond à une dimension λ plus petite que le diamètre D, et à une position $z_c$ proche de l'axe x'x.

La figure 2B montre un profil où le bord inférieur de la couche de mélange est à l'intérieur de la section d'écoulement, mais où le bord supérieur est à l'extérieur. Dans ce cas, seule la phase eau est présente dans le bas de la section tandis que le fluide occupant le haut de la section est un mélange des phases à faible proportion d'eau. Ceci correspond à une dimension λ plus petite que le diamètre D et à une position $z_c$ positive et fortement écartée de l'axe x'x.

La figure 2C correspond au cas où la dimension λ de la couche de mélange est supérieure au diamètre de la section. Toute la section est occupée par un mélange des phases eau et pétrole.

La figure 2D montre un profil analogue à celui de la figure 2B mais en sens inverse. La dimension λ est plus petite que le diamètre D, et la position $z_c$ est négative et fortement écartée de l'axe x'x. Seule la phase pétrole occupe le haut de la section d'écoulement, alors que le bas de la section est occupé par un mélange à forte proportion d'eau.

En utilisant une analyse de dimension, et en négligeant la viscosité, on aboutit à la relation ci-après pour la dimension λ:

$$\lambda = \frac{D}{\kappa.\sin\theta} \qquad (3)$$

où κ est une constante pour un diamètre donné (égale à 1,06 pour D = 20 cm et 1,4 pour D = 10 cm).

Pour établir le profil de variation α(z), il faut en outre déterminer le paramètre $z_c$ ou, ce qui revient au même, la moyenne $\alpha_m$ de la proportion d'eau selon l'axe z'z. Ceci est réalisé en ajustant le paramètre $z_c$ ou $\alpha_m$ de façon à faire concorder les valeurs calculées suivant le modèle avec des valeurs mesurées. On utilise pour cela des mesures de la proportion statique d'eau α à la profondeur considérée, qui peuvent être soit une ou plusieurs mesures de la valeur locale de α, soit une mesure de la valeur moyenne de α sur la section d'écoulement.

Le modèle géométrique exposé ci-dessus présente dans la plupart des cas une concordance raisonnable, compte tenu de sa simplicité, avec les données expérimentales disponibles, présentées dans l'article précité de Vigneaux et al. Un modèle plus précis a été établi, selon une approche fondée sur les lois de la diffusion turbulente.

Un élément du mélange, d'épaisseur dz et de densité ρ(z), est le résultat de deux flux opposés : l'un dû à la force d'Archimède liée à la différence des densités, qui tend à faire monter la phase pétrole, plus légère, l'autre dû à la diffusion turbulente, qui tend à homogénéiser le mélange.

Cela s'exprime par l'équation

$$K \frac{\partial \alpha}{\partial z} + s(1-\alpha) = 0 \tag{4}$$

où K est un coefficient de diffusion turbulente et s est la vitesse de sédimentation. En supposant s constant, on aboutit à l'expression

$$\alpha(z) = 1 - C.e^{sz/K} \tag{5}$$

Il est avantageux d'exprimer $\alpha(z)$ en fonction de la moyenne $\alpha_m$ de $\alpha(z)$ selon l'axe z'z. Considérons le cas d'un profil du type représenté à la figure 2C, où le bord supérieur de la couche turbulente est extérieur à la conduite. Il n'existe alors aucune valeur de z comprise entre -D/2 et +D/2 pour laquelle $\alpha = 0$. Par intégration sur l'intervalle {-D/2, +D/2}, on trouve

$$\alpha(Z) = 1 - \frac{P(1 - \alpha_m)}{shP} e^{2PZ} \tag{6}$$

avec $Z = \frac{z}{D}$ (grandeur sans dimension)

$$P = \frac{sD}{2K}$$

En confrontant le gradient calculé à partir de l'expression (6) au gradient constant du premier modèle, on obtient pour P l'expression

$$P = \frac{\kappa.\sin\theta}{2(1-\alpha_m)} \tag{7}$$

$\kappa$ ayant la même valeur que dans le premier modèle, ce qui donne

$$\alpha(Z) = 1 - \frac{\kappa.\sin\theta}{2shP} e^{2PZ} \tag{8}$$

L'expression (6) ci-dessus a été obtenue en supposant $\alpha(z) > 0$ sur tout le profil. Dans le cas d'un profil du type représenté à la figure 2D, la proportion d'eau devient nulle à partir d'un certain point. Cela correspond à l'existence d'une valeur $z_e$ qui remplit simultanément les conditions :

$$\begin{cases} \alpha(z_e) = 0 \\ z_e < D/2 \end{cases}$$

Le profil $\alpha(z)$ se compose alors d'une portion de courbe sur l'intervalle {-D/2, $z_e$} et d'une portion $\alpha = 0$ sur l'intervalle {$z_e$, +D/2}. On a constaté que l'expression (6), bien qu'elle corresponde en toute rigueur à un cas différent, à savoir $z_e$ > D/2, fournit une approximation satisfaisante pour la portion du profil $\alpha(z)$ dans l'intervalle {-D/2, $z_e$}.

On peut alors, de façon générale, présenter la définition du profil comme suit :

$$\begin{cases} \alpha(Z) = 1 - \frac{\kappa.\sin\theta}{2shP} e^{2PZ} \quad \text{pour } z < \min\{z_e, D/2\} \\ \text{et, uniquement dans le cas où } z_e < D/2 : \\ \alpha(Z) = 0 \qquad \text{pour } z_e < z < D/2 \end{cases}$$

$\min\{z_e, D/2\}$ signifiant celle des valeurs de $z_e$ et D/2 qui est la plus petite.

Le profil $\alpha(z)$ est établi en déterminant la valeur du paramètre P (ou $\alpha_m$) par ajustement du modèle en fonction de mesures de la proportion d'eau $\alpha$.

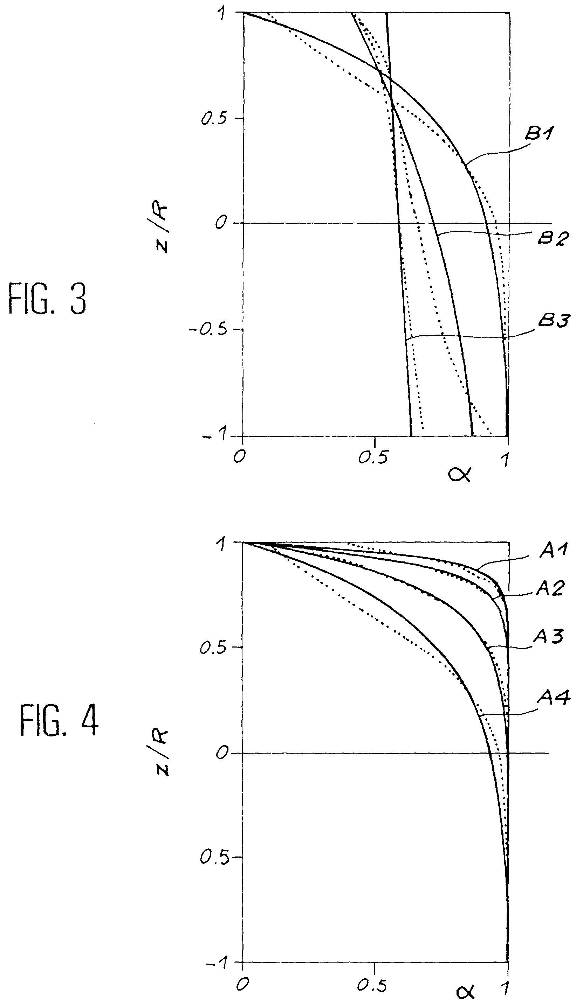

Les figures 3 et 4 illustrent la bonne concordance de ce modèle (courbes en trait plein) avec les valeurs expérimentales (pointillés) obtenues dans une installation à conduite inclinable. Les conditions sont les suivantes.

Dans le cas de la figure 3, l'inclinaison $\theta$ est 65°, le diamètre D est 200 mm, le débit total 2000 barils/jour (13,2 m³/h). Les quatre courbes repérées A1, A2, A3, A4 correspondent respectivement à des proportions dynamiques d'eau (en anglais "watercut") de 95%, 90%, 70% et 30%. Le paramètre porté en abscisse est la proportion statique d'eau $\alpha$, le paramètre en ordonnée est le rapport z/R (R rayon de la conduite).

Dans le cas de la figure 4, la proportion dynamique d'eau est fixée à 50%, et les courbes correspondent à des valeurs différentes pour l'inclinaison $\theta$ : 65° pour la courbe B1, 25° pour la courbe B2, 5° pour la courbe B3.

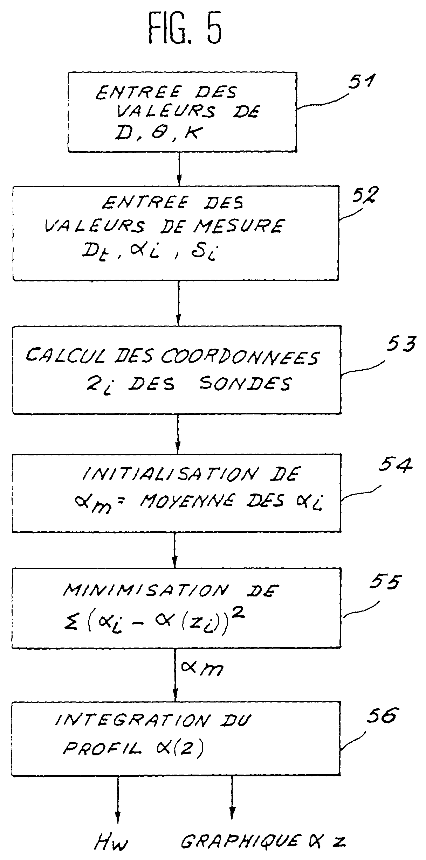

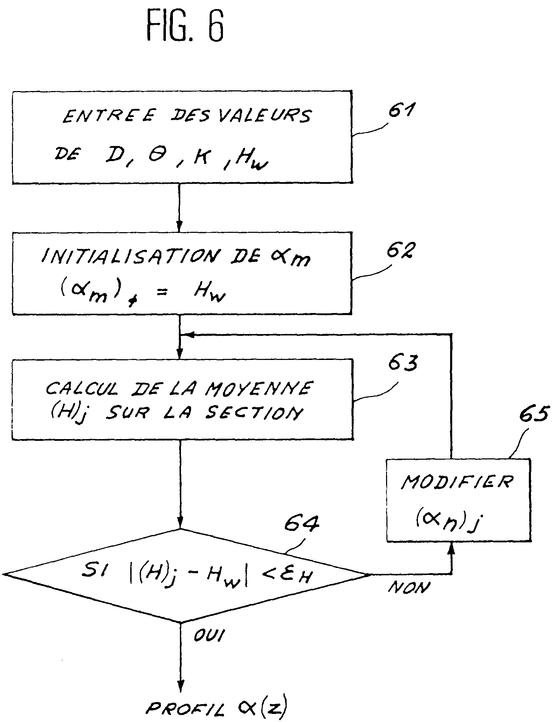

Comme indiqué plus haut à propos du modèle à gradient constant, on peut, pour établir ce profil, utiliser soit des mesures locales de a, soit une mesure de la valeur moyenne sur la section d'écoulement. Les étapes de calcul utilisant les mesures locales sont illustrées par le diagramme-blocs de la figure 5, et le calcul à partir de la valeur moyenne est représenté par le diagramme-blocs de la figure 6.

L'instrument décrit dans le brevet US 4 974 446 ou la demande de brevet européen 0 394 085 possède un nombre N de sondes hyperfréquence de petite dimension, angulairement réparties sur un cercle centré sur l'axe de l'instrument, de diamètre $D_t$, la position angulaire d'une sonde par rapport à une origine liée à l'axe z'z étant notée $\beta_i(i=1,N)$. L'instrument peut être assujetti à rester centré par rapport au puits, ou bien conçu de façon à prendre appui sur la partie inférieure de la paroi du puits.

Des moyens sont associés à l'instrument pour mesurer l'inclinaison $\theta$ du puits et les positions angulaires $\delta_i$. Le diamètre D du puits est supposé connu, ou mesuré à l'aide d'un diamétreur.

Les valeurs de D et $\theta$, ainsi que de la constante K, connue pour un diamètre D donné, sont fournies dans l'étape 51 du diagramme.

L'étape 52 est l'entrée des données de mesure fournies par l'instrument susvisé, à savoir, le diamètre $D_t$, la mesure locale de proportion d'eau $\alpha_i$ et les positions angulaires respectives $\delta_i$ des sondes.

L'étape 53 fournit pour chacune des sondes i la coordonnée $z_i$ selon l'axe z'z, en fonction du diamètre $D_t$ et de la position angulaire $\delta_i$. Le calcul dépend bien entendu de la façon dont l'instrument est placé par rapport au puits (centré, ou appliqué vers le bas).

Dans l'étape 54, on détermine une valeur initiale pour le paramètre $\alpha_m$, en calculant la moyenne des mesures $\alpha_i$.

On calcule ensuite (étape 55) par la méthode des moindres carrés la valeur $\alpha_m$ qui correspond à l'ajustement optimal de l'ensemble des valeurs $\alpha(z_i)$ calculées comme indiqué plus haut aux valeurs de mesures $\alpha_i$,

Ce résultat $\alpha_m$ est la moyenne de la proportion d'eau $\alpha$ selon l'axe z'z. On en tire le profil $\alpha(z)$, à partir de quoi on peut calculer (étape 56) la proportion moyenne d'eau $H_W$, par intégration du profil $\alpha(z)$ sur la section d'écoulement circulaire A, selon l'expression

$$H_w = - \int_{-\frac{D}{2}}^{+\frac{D}{2}} \alpha(z).(D^2 - 4z^2)^{\frac{1}{2}}.dz \qquad (9)$$

Des représentations graphiques du profil $\alpha(z)$ et de la proportion moyenne d'eau $H_w$ peuvent être obtenues en sortie.

Le diagramme de la figure 6 montre les étapes du traitement permettant d'établir un profil $\alpha(z)$ à partir de la proportion moyenne d'eau $H_w$. Dans l'étape initiale 61, sont fournies les valeurs du diamètre D, de l'inclinaison $\theta$, de la constante $\kappa$, et la valeur de $H_w$ obtenue par mesure.

On fixe dans l'étape 62 une valeur initiale $(\alpha_m)_1$ pour $\alpha_m$, qui peut être prise égale à $H_w$.

L'étape 63 consiste dans le calcul d'une valeur moyenne $(H)_j$, prise sur la section d'écoulement de forme circulaire. Ce calcul se fait conformément à l'expression (9) ci-dessus.

Cette valeur $(H)_j$ est comparée à $H_w$ dans l'étape 64. Si la différence n'est pas inférieure à une quantité $\varepsilon_H$ déterminée, le calcul est recommencé avec une valeur $(\alpha_m)_{j+1}$ pour $\alpha_m$ différente, et ce jusqu'à ce que la différence entre le résultat de l'étape 63 et $H_w$ soit inférieure à la quantité $\varepsilon_H$. La valeur correspondante de $\alpha_m$ permet d'établir le profil $\alpha(z)$.

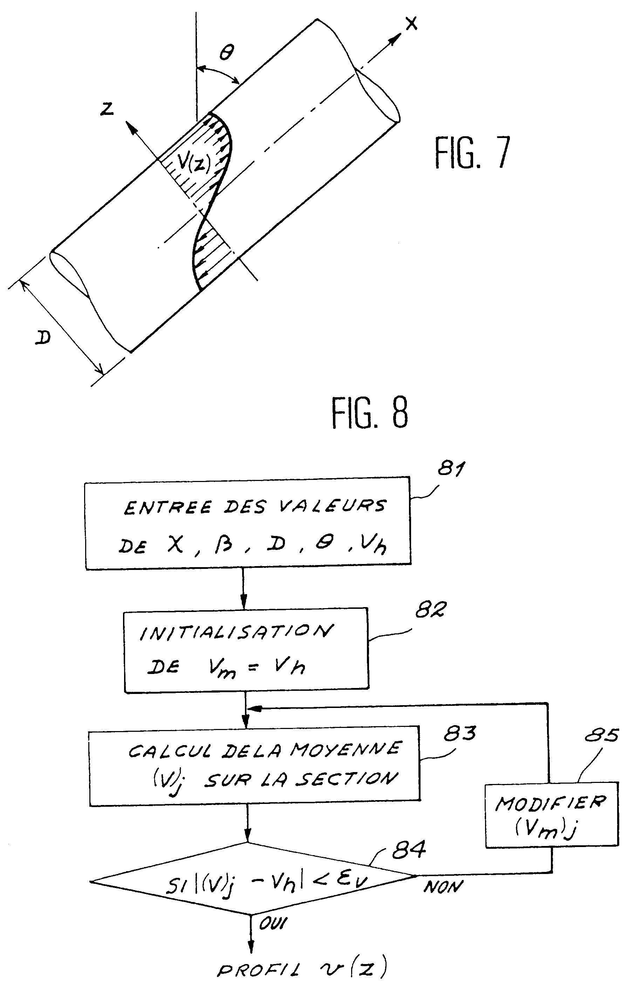

On se réfère ensuite à la figure 7 qui montre un profil de vitesse v(z), c'est-à-dire la variation de la vitesse v suivant l'axe z'z défini comme précédemment (axe perpendiculaire à l'axe du puits x'x et situé dans un plan vertical). La vitesse v considérée ici prend en compte l'ensemble de l'écoulement, c'est-à-dire les deux phases. C'est la vitesse du mélange :

$$v = \alpha.v_w + (1 - \alpha).v_o$$

où $v_w$ et $v_o$ sont respectivement les vitesses des phases eau et pétrole.

Le profil représenté à titre d'exemple sur la figure 6 comporte une partie négative dans le bas de la section. Cela correspond à un écoulement vers le bas du fluide occupant la partie inférieure de la section, tandis que le fluide occupant le haut de la section s'écoule vers la surface (partie positive du profil).

Du point de vue théorique, le profil de vitesse v(z) est la solution de l'équation de Navier-Stokes, dans le cas d'un gradient de densité $\rho(z)$ donné par

$$\rho(z) = \rho_w \alpha(z) + \rho_o(1-\alpha(z)) \qquad (10)$$

$\rho_w$ et $\rho_o$ étant les densités respectivement de l'eau et du pétrole produits dans le puits.

En faisant les hypothèses simplificatrices d'un profil $\alpha(z)$ correspondant à l'expression (1b) ci-dessus, et d'une viscosité turbulente constante, et en supposant, en ce qui concerne les conditions aux limites, que la vitesse au voisinage des parois obéit à un profil logarithmique, on aboutit à l'expression

$$v(z) = -6V_m \left(Z^2 - \frac{1}{4}\right) + \chi.D \left(\sin\theta.\cos\theta\right)^{\frac{1}{2}}.Z$$

$$-\frac{2\beta}{D}\sin^2\theta.Z\left(Z^2 - \frac{1}{4}\right) \tag{11}$$

où

$V_m$ est la vitesse moyenne selon l'axe z'z

$Z = \frac{z}{D}$

$\chi$ est une constante égale à environ $5.s^{-1}$

$\beta$ est une constante égale à environ $0{,}7\ m^2\ s^{-1}$

Dans ce cas, la valeur de P, défini à l'expression (7), est relativement grande, comprise entre 1 et 50 ou plus, par exemple. P est fonction de la proportion d'eau et une valeur relativement importante indique des gradients importants et non-uniformes.

Le profil de vitesse v(z) peut être établi à partir d'une mesure de la valeur moyenne de la vitesse sur la section d'écoulement, telle que la fournit un débitmètre à hélice, ou bien à partir de mesures locales de la vitesse des bulles ou de la vitesse superficielle de la phase dispersée, obtenues conformément à l'enseignement de la demande de brevet européen précitée 0 394 085.

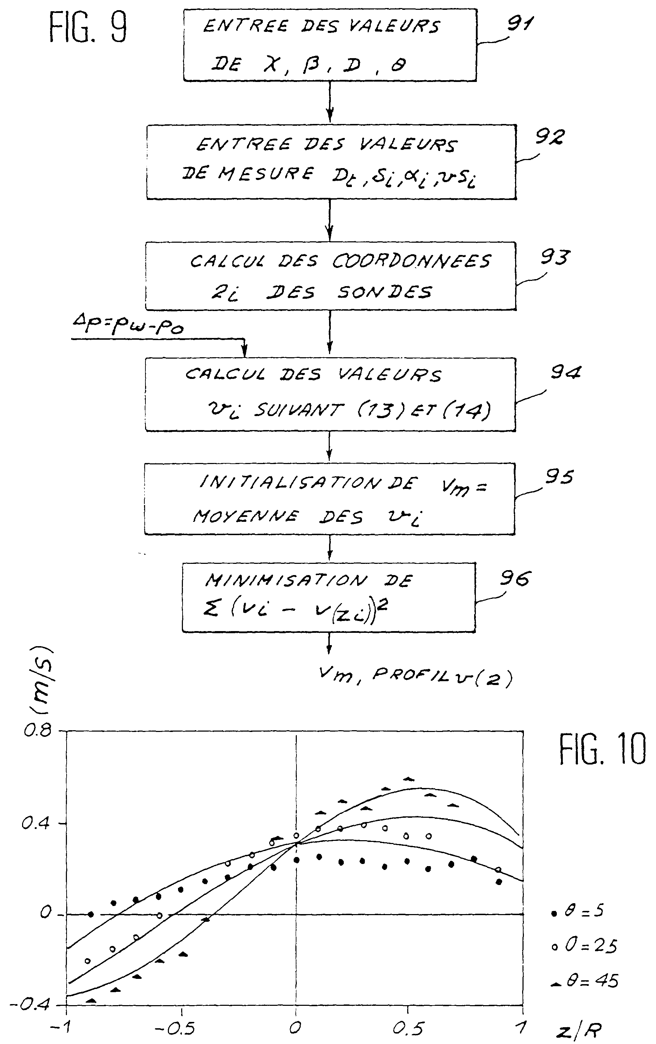

Les traitements correspondants sont représentés respectivement par les diagrammes des figures 8 et 9.

Le traitement utilisant la vitesse moyenne comprend une étape initiale 81 dans laquelle sont fournies les valeurs des paramètres D et $\theta$ (diamètre et inclinaison du puits), des constantes $\beta$ et $\chi$, et de la vitesse moyenne V (égale au rapport du débit total $Q_T$ sur la section A), mesurée à la profondeur considérée.

Le calcul itératif qui suit permet d'ajuster la grandeur $V_m$, moyenne de la vitesse v(z) suivant l'axe z'z, de manière à faire concorder la vitesse moyenne correspondante sur la section d'écoulement avec la valeur mesurée.

L'étape 82 consiste à fixer pour $V_m$ une valeur initiale $(V_m)_1$, que l'on choisit égale à la valeur mesurée V.

Dans l'étape 83, on calcule la valeur moyenne de la vitesse sur la section d'écoulement de diamètre D, selon la relation

$$(V_h)_1 = \int_{-\frac{D}{2}}^{+\frac{D}{2}} v(z)\{V_m = V\}.(D^2 - 4z^2)^{\frac{1}{2}}.dz \tag{12}$$

où la notation $v(z)\{V_m = V_h\}$ signifie que l'on donne au paramètre $V_m$ figurant dans l'expression de v(z) la valeur V.

La valeur $(V)_i$ est comparée à la valeur mesurée V dans l'étape 84. Si la différence est supérieure à une petite quantité déterminée $\varepsilon_V$, on poursuit l'itération en modifiant la valeur donnée à $V_m$ (étape 85), et ce jusquà ce que la différence soit inférieure à la quantité $\varepsilon_V$, auquel cas on retient la valeur correspondante $(V_m)_k$ comme valeur de $V_m$, et l'on établit le profil de vitesse v(z).

Le diagramme de la figure 9 indique les étapes du calcul pour l'établissement du profil de vitesse en partant de mesures locales.

Les mesures locales obtenues conformément à l'enseignement de la demande de brevet européen 0 394 085, au moyen d'un instrument équipé de N sondes hyperfréquence, permettent d'obtenir pour chaque sonde notée i (i=1,N) la proportion d'eau locale $\alpha_i$ et la vitesse superficielle $vs_i$ de la phase dispersée. Ces grandeurs sont liées à la vitesse locale $v_i$ par la relation

$$(1 - \alpha_i).v_i = vs_i - \alpha_i(1 - \alpha_i).(v_s)_i \tag{13}$$

où $(v_s)_i$ est la vitesse locale de glissement entre les phases.

Selon le modèle de Choquette, la vitesse locale de glissement est donnée par la relation

$$vs = V_{lim}.e^{-c(1 - \alpha)} \tag{14}$$

où c est une constante et $V_{lim}$ est de la forme $f(\rho_w - \rho_o).(\cos\theta)^{\frac{1}{2}}$.

L'étape initiale 91 fournit les valeurs des constantes X et $\beta$ mentionnées ci-dessus en référence à l'expression (11), et des paramètres D (diamètre du puits) et $\theta$.

L'étape 92 consiste dans l'entrée des données suivantes : le diamètre $D_t$ du cercle sur lequel sont placées les sondes, et pour chaque sonde i, la position angulaire $\delta_i$, la proportion d'eau $\alpha_i$ et la vitesse superficielle $vs_i$.

L'étape 93 est identique à l'étape 53 décrite en référence à la figure 5, et fournit les coordonnées $z_i$ des sondes sur l'axe z'z.

L'étape 94 consiste dans le calcul des vitesses locales $v_i$ à partir des valeurs mesurées précitées, sur la base des expressions (13) et (14).

L'étape 95 consiste à calculer les vitesses locales $v(z_i)$ sur la base du modèle correspondant à l'expression (11) ci-dessus, pour les valeurs $z_i$ obtenues à l'étape 93. On choisit comme valeur initiale de $V_m$ la moyenne des vitesses locales $v_i$ obtenues à l'étape 94.

L'étape 96 consiste à obtenir par la méthode des moindres carrés la valeur de $V_m$ qui correspond au meilleur ajustement de l'ensemble des valeurs $v(z_i)$ calculées par le modèle avec les valeurs $v_i$ résultant des mesures. Une fois obtenue cette valeur, le profil de vitesse $v(z)$ peut être établi.

On peut évaluer les débits totaux de pétrole $Q_o$ et d'eau $Q_w$ sur la base des profils $\alpha(z)$ et $v(z)$, par intégration sur la section d'écoulement A des débits locaux respectifs $q_o$ et $q_w$ donnés par les expressions

$$q_o = (1 - \alpha).v + \alpha(1 - \alpha).v_s$$

$$q_w = \alpha.v - \alpha(1 - \alpha).v_s$$

Les vitesses moyennes correspondantes, $V_o$ pour le pétrole et $V_w$ pour l'eau, peuvent être calculées à partir des débits $Q_o$ et $Q_w$ :

$$V_o = \frac{Q_o}{A\,(1 - H_w)}$$

$$V_w = \frac{Q_w}{A.H_w}$$

Connaissant les vitesses moyennes, on peut ensuite déterminer une vitesse moyenne de glissement Vs par :

$$Vs = V_o - V_w$$

La figure 10 présente une comparaison entre des profils de vitesse mesurés et les profils prédits par le modèle décrit ci-dessus. Les profils représentés correspondent aux conditions suivantes : débit total de 4000 barils/jour (26,5 m$^3$/h), et inclinaison $\theta$ de respectivement 5°, 25° et 45°. On constate une concordance convenable entre les valeurs expérimentales et les résultats obtenus à partir du modèle.

Outre le modèle de vitesse pour les valeurs de P importantes (expression (11)), un modèle de vitesse a été developpé pour P petit (P<1). Dans ce cas, les gradients d'écoulement sont petits et uniformes. Le modèle est défini comme suit:

$$v(z_2) = V_m + 6V^*_2(Z^2 - 1/12) + 2V^*_2.Z - 2V^*_2.e^{2P(Z-1/2)} \tag{15}$$

où $V^*_2$ est une constante égale à 0,3 m/s environ.

A partir des modèles spécifiques des expressions (11) et (15), le modèle général suivant a été établi:

$$v(z_3) = e^{-P/10}.v(z_1) + (1 - e^{-P/10}).v(z_2) \tag{16}$$

Pour P grand, l'expression (16) se ramène à l'expression (15). Pour P petit, l'expression (16) se ramène à l'expression (11).

## Revendications

1. Procédé d'analyse de l'écoulement dans un puits incliné, l'écoulement comprenant du pétrole et de l'eau, caractérisé par le fait que, pour une profondeur où l'on dispose d'au moins une mesure d'un paramètre d'écoulement, on établit à partir de cette mesure, connaissant l'inclinaison $\theta$ et le diamètre D du puits à la dite profondeur, un profil de variation de ce paramètre le long d'un axe z'z défini par le diamètre de la section transversale du puits situé dans un plan vertical, en utilisant un modèle prévoyant une couche de mélange eau-pétrole turbulente.

2. Procédé selon la revendication 1, dans lequel le dit paramètre est la proportion statique d'eau $\alpha$ et on établit le profil de variation $\alpha(z)$ en ajustant le modèle à partir d'au moins une mesure locale du dit paramètre.

3. Procédé selon la revendication 2, dans lequel on détermine à partir du profil $\alpha(z)$ la valeur moyenne $H_w$ de la proportion statique d'eau sur la section transversale considérée.

4. Procédé selon la revendication 1, dans lequel on établit le profil de variation en ajustant le modèle à partir d'une mesure de la valeur moyenne du dit paramètre sur la section considérée.

5. Procédé selon l'une des revendications 1 à 4, dans lequel la couche de mélange turbulente a une dimension $\lambda$ selon l'axe z'z donnée par la relation

$$\lambda = \frac{D}{\kappa \, \sin\theta}$$

dans laquelle $\kappa$ est une constante pour un diamètre D donné.

6. Procédé selon la revendication 5, dans lequel le modèle prévoit un gradient constant pour la variation de la proportion statique d'eau $\alpha$ dans la couche de mélange, selon la relation

$$\alpha(z) = \frac{1}{2} + \frac{z_c - z}{\lambda}$$

où $z_c$ est la position sur l'axe z'z du centre de la couche de mélange.

7. Procédé selon l'une des revendications 1 à 4, dans lequel le modèle prévoit que la proportion statique d'eau $\alpha$ varie suivant l'axe z'z conformément à la relation :

$$\alpha(Z) = 1 - \frac{\kappa . \sin\theta}{2shP} e^{2PZ} \qquad \text{pour } z < \min\{z_e, D/2\}$$

où

- $Z = z/D$

- $\kappa$ est une constante pour un diamètre D donné

- $P = \frac{\kappa . \sin\theta}{2(1-\alpha_m)}$ où $\alpha_m$ est la valeur moyenne de $\alpha$ suivant le profil,

- $z_e$ est définie par $\alpha(z_e) = 0$

- $\min\{z_e, D/2\}$ vaut D/2, ou $z_e$ si $z_e$ est plus petit que D/2,

et dans le cas où $z_e$ est plus petit que D/2, le profil comprend en outre une portion définie par :

$$\alpha = 0 \qquad \text{pour } z_e < z < D/2.$$

8. Procédé selon la revendication 1, dans lequel le dit paramètre est la vitesse, et on établit un profil de variation de la vitesse v(z) en ajustant un modèle à partir d'une mesure de la valeur moyenne de la vitesse sur la section considérée.

**Patentansprüche**

1. Verfahren zum Analysieren des Einstroms, umfassend Erdöl und Wasser, in ein geneigtes Bohrloch, dadurch gekennzeichnet, daß für eine Tiefe, in der man über mindestens eine Messung eines Einstrom-Parameters verfügt, man ausgehend von dieser Messung unter Kenntnis der Schräge $\theta$ und des Durchmessers D des Bohrlochs bei der genannten Tiefe ein Profil der Variation dieses Parameters längs einer Achse z'z etabliert, definiert durch den Durchmesser des Bohrlochquerschnitts, der sich in einer Vertikalebene befindet, unter Verwendung eines Modells, das eine turbulente Schicht der Mischung Wasser-Erdöl vorsieht.

2. Verfahren nach Anspruch 1, bei dem der genannte Parameter die statische Proportion an Masser $\alpha$ ist, und man das Profil der Variation $\alpha(z)$ etabliert unter Einstellung des Modells, ausgehend von mindestens einer lokalen Messung dieses Parameters.

3. Verfahren nach einem Anspruch 2, bei dem man, ausgehend von dem Profil $\alpha(z)$, den Mittelwert $H_W$ des statischen Wasseranteils in dem betrachteten Querschnitt bestimmt.

4. Verfahren nach Anspruch 1, bei dem man das Variationsprofil etabliert unter Anpassung des Modells, ausgehend von einer Messung des Mittelwertes des genannten Parameters in dem betrachteten Querschnitt.

5. Verfahren nach einem der Ansprüche 1 bis 4, bei dem die turbulente Schicht des Gemischs eine Dimension $\lambda$ längs der Achse z'z aufweist, gegeben durch die Beziehung

$$\lambda = \frac{D}{\kappa \, \sin\theta}$$

worin $\kappa$ eine Konstante für einen gegebenen Durchmesser D ist.

6. Verfahren nach Anspruch 5, bei dem das Modell einen konstanten Gradienten für die Variation des statischen Anteils an Wasser $\alpha$ in der Gemischschicht vorsieht, gemäß der Beziehung

$$\alpha(z) = \frac{1}{2} + \frac{z_c - z}{\lambda}$$

worin $z_c$ die Position auf der Achse z'z des Zentrums der Gemischschicht ist.

7. Verfahren nach einem der Ansprüche 1 bis 4, bei dem das Modell einen statischen Wasseranteil $\alpha$ vorsieht, der variabel ist längs der Achse z'z, entsprechend der Beziehung

$$\alpha(Z) = 1 - \frac{\kappa . \sin\theta}{2shP} e^{2PZ} \qquad \text{für } z < \min\{z_e, D/2\}$$

worin

- $Z = z/D$
- $\kappa$ eine Konstante für einen gegebenen Durchmesser D ist
- $P = \frac{\kappa . \sin\theta}{2(1-\alpha_m)}$ , worin $\alpha_m$ der Mittelwert von $\alpha$ längs des Profils
- $z_e$ definiert ist durch $\alpha(z_e) = 0$
- $\min[z_e, D/2]$ D/2 ist oder aber $z_e$ beträgt, wenn $z_e$ kleiner ist als D/2,

und in dem Fall, worin $z_e$ kleiner ist als D/2, das Profil ferner einen Abschnitt umfaßt, definiert durch:

$$\alpha = 0 \qquad \text{für } z_e < z < D/2.$$

8. Verfahren nach Anspruch 1, bei dem der genannte Parameter die Geschwindigkeit ist, und man ein Veränderungsprofil der Geschwindigkeit v(z) etabliert unter Anpassung eines Modells, ausgehend von einer Messung des Mittelwertes der Geschwindigkeit über dem betrachteten Querschnitt.

**Claims**

1. A method of analyzing the flow in an inclined well, which flow comprises both oil and water, characterized by the step of establishing, for a depth z at which at least one flow parameter measurement is available, a variation profile of said parameter along an axis z'z defined by the diameter of a well cross-section under consideration that lies in a vertical plane, said model being established from said measurement, assuming a deviation $\Theta$ and a diameter D of the well at said depth, by using a model that assumes a layer comprising a turbulent mixture of water and oil.

2. A method according to claim 1, in which the variation profile is established by fitting the model to match at least one local measurement of said parameter.

3. A method according to claim 2, in which the mean value $H_w$ of the water holdup over the cross-section in consideration is determined on the basis of said profile.

4. A method according to claim 1, in which the variation profile is established by fitting the model to match a measurement of the mean value of said profile in the section under consideration.

5. A method according to any one of claims 1 to 4, in which the dimension $\lambda$ of the turbulent mixed layer on the axis z'z is given by the equation:

$$\lambda = \frac{D}{\kappa . \sin\theta}$$

where $\kappa$ is a constant for a given diameter D.

6. A method according to claim 5, in which the model assumes a constant gradient for the variation of the water holdup $\alpha$ in the layer of mixture as given by the equation:

$$\alpha(z) = \frac{1}{2} + \frac{z_c - z}{\lambda}$$

where $z_c$ is the position on the axis z'z of the center of the layer of mixture.

7. A method according to any one of claims 1 to 4, in which the model assumes that the water holdup $\alpha$ varies along the axis z'z in compliance with the equation:

$$\alpha(Z) = 1 - \frac{\kappa.\sin\theta}{2shP} e^{2PZ} \text{ for } z < \min\{z_e, D/2\}$$

where:

$Z = z/D$

$\kappa$ is a constant for a given diameter D

$P = \frac{\kappa.\sin\theta}{2(1-\alpha_m)}$

where $\alpha_m$ is the mean value of $\alpha$ according to the profile

$z_e$ is defined by $\alpha(z_c) = 0$

$\min\{z_e, D/2\}$ is equal to D/2, or $z_e$ if $z_e$ is less than D/2; and

when $z_e$ is less than D/2, the profile further includes a portion defined by:

$$\alpha = 0 \text{ for } z_e < z < D/2.$$

8. A method according to claim 1, in which the said parameter is velocity, and in which a velocity variation profile v(z) is established by fitting a model to a measurement of the mean value of the velocity over the section under consideration.

FIG. 1

FIG. 2

TYPE IV

A

PETROLE

EAU

B

TYPE I

C

TYPE II

D

TYPE III

FIG. 3

FIG. 4

# FIG. 5

```
┌─────────────────────┐
│    ENTRÉE DES       │ ─── 51
│   VALEURS DE        │
│    D, θ, K          │
└─────────────────────┘
          │
          ▼
┌─────────────────────┐
│    ENTRÉE DES       │ ─── 52
│  VALEURS DE MESURE  │
│   $D_t, \alpha_i, S_i$  │
└─────────────────────┘
          │
          ▼
┌─────────────────────┐
│ CALCUL DES COORDONNÉES │ ─── 53
│   $z_i$ DES SONDES   │
└─────────────────────┘
          │
          ▼
┌─────────────────────┐
│  INITIALISATION DE  │ ─── 54
│ $\alpha_m$ = MOYENNE DES $\alpha_i$ │
└─────────────────────┘
          │
          ▼
┌─────────────────────┐
│  MINIMISATION DE    │ ─── 55
│ $\sum (\alpha_i - \alpha(z_i))^2$ │
└─────────────────────┘
          │ $\alpha_m$
          ▼
┌─────────────────────┐
│  INTÉGRATION DU     │ ─── 56
│  PROFIL $\alpha(z)$  │
└─────────────────────┘
      │            │
      ▼            ▼
     $H_w$      GRAPHIQUE $\alpha$ $z$
```

# FIG. 6

```
┌─────────────────────────────┐
│  ENTREE DES VALEURS         │      61
│  DE  D, θ, K, Hw            │
└─────────────────────────────┘
              │
              ▼
┌─────────────────────────────┐
│  INITIALISATION DE αm       │      62
│  (αm)₊ = Hw                 │
└─────────────────────────────┘
              │
              ▼
┌─────────────────────────────┐
│  CALCUL DE LA MOYENNE       │      63
│  (H)j SUR LA SECTION        │
└─────────────────────────────┘
```

$(\alpha_m)_+ = H_w$

CALCUL DE LA MOYENNE $(H)_j$ SUR LA SECTION

MODIFIER $(\alpha_n)_j$ — 65

SI $|(H)_j - H_w| < \varepsilon_H$ — 64

NON

OUI

PROFIL $\alpha(z)$

FIG. 7

FIG. 8

ENTREE DES VALEURS DE $X$, $\beta$, $D$, $\theta$, $V_h$    81

INITIALISATION DE $V_m = V_h$    82

CALCUL DE LA MOYENNE $(V)_j$ SUR LA SECTION    83

MODIFIER $(V_m)_j$    85

SI $|(V)_j - V_h| < \varepsilon_v$    84    NON

OUI

PROFIL $\upsilon(z)$

FIG. 9

| ENTREE DES VALEURS DE $X, \beta, D, \theta$ | 91 |

| ENTREE DES VALEURS DE MESURE $D_t, S_i, \alpha_i, \nu s_i$ | 92 |

| CALCUL DES COORDONNEES $z_i$ DES SONDES | 93 |

$\Delta p = p_w - p_0$

| CALCUL DES VALEURS $\nu_i$ SUIVANT (13) ET (14) | 94 |

| INITIALISATION DE $V_m$ = MOYENNE DES $\nu_i$ | 95 |

| MINIMISATION DE $\Sigma (\nu_i - \nu_{(z_i)})^2$ | 96 |

$V_m$, PROFIL $\nu(z)$

FIG. 10

$\bullet \theta = 5$

$\circ \theta = 25$

$\blacktriangle \theta = 45$